# FASCICULE DE BREVET EUROPEEN

(11) **EP 0 403 319 B1**
(45) Date de publication et mention de la délivrance du brevet: **29.12.1993**
(21) Numéro de dépôt: 90401255.6
(22) Date de dépôt: 11.05.1990
(51) Int. Cl.: G05D 16/20

(54) **Régulateur manométrique à fuite pour circuit hydraulique**
Undichter manometrischer Regler für hydraulische Kreise
Manometric regulator with leak for hydraulic circuit

(30) Priorité: 14.06.1989 FR 8907859
(43) Date de publication de la demande: 19.12.1990
(73) Titulaire: ALLIEDSIGNAL EUROPE SERVICES TECHNIQUES, 93700 Drancy (FR)
(72) Inventeur: Vasselet, Joel, Bendix Europe Services Techniques, F-93700 Drancy (FR)
(74) Mandataire: Bentz, Jean-Paul

(56) Documents cités:
- EP-A- 0 317 183
- DE-A- 3 402 352
- FR-A- 2 577 701
- US-A- 4 662 605
- US-A- 4 744 389

## Description

La présente invention concerne les circuits hydrauliques comprenant au moins un réservoir de fluide sous basse pression, un accumulateur de fluide sous pression élevée et une pompe à commande électrique voir notamment le document DE-A-3 402 352. On trouve notamment un tel circuit dans certains systèmes de freinage de véhicules automobiles.

On sait qu'en fonctionnement, la pression du fluide dans l'accumulateur doit rester dans une plage déterminée pour que le fluide puisse être utilisé convenablement dans le moteur hydraulique généralement connecté au circuit, et que, hors fonctionnement, il est souhaitable que le fluide s'échappe lentement de l'accumulateur pour mettre le circuit au repos.

L'invention a pour objet un régulateur manométrique permettant d'assurer l'ensemble de ces fonctions de manière peu onéreuse et très fiable.

Le régulateur, selon l'invention, comprend :
- un poussoir faisant saillie d'une chambre reliée au réservoir ;
- au moins un capteur de la position d'un noyau magnétique coulissant sous l'effet du poussoir au voisinage du capteur, de manière à commander le fonctionnement de la pompe ;
- un piston coulissant de façon non étanche dans un alésage communiquant d'une part avec la chambre et d'autre part avec une sortie de l'accumulateur, de façon à déterminer une fuite du fluide hydraulique entre l'accumulateur et le réservoir, le piston ayant une extrémité s'appuyant sur le poussoir ; et
- un moyen élastique s'opposant à l'effet de la pression du fluide dans l'accumulateur sur le piston, de manière que la position du noyau soit fonction de la pression du fluide dans l'accumulateur.

De préférence, le moyen élastique est un ressort hélicoïdal disposé dans la chambre et s'appuyant sur le poussoir.

De préférence également, le capteur est un interrupteur électrique à commande magnétique relié au circuit d'alimentation électrique de la pompe.

Enfin, de préférence, au moins une rainure, par exemple en forme d'hélice, est pratiquée à la périphérie du piston ou dans l'alésage de manière à assurer l'autocentrage du piston et son coulissement sur un film de fluide ainsi que la fuite désirée.

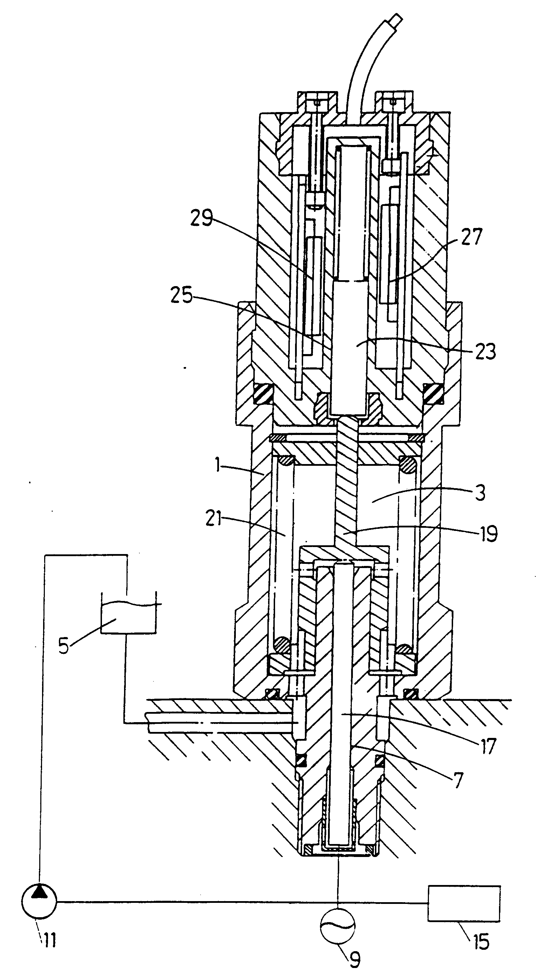

L'invention sera mieux comprise et d'autres buts, avantages et caractéristiques de celle-ci apparaitront plus clairement à la lecture de la description qui suit d'un mode préféré de réalisation donnée à titre non limitatif, à laquelle une planche de dessin est jointe sur laquelle :
- la Figure unique représente schématiquement en coupe un régulateur manométrique conforme à l'invention.

En référence maintenant à cette Figure unique, un circuit hydraulique comprend un réservoir de fluide sous basse pression 5 relié à un accumulateur de fluide sous pression élevée 9 par l'intermédiaire d'une pompe électrique 11. Un moteur hydraulique 15 est également relié à la sortie de l'accumulateur 9.

Le régulateur selon l'invention comprend un corps 1 dans lequel est ménagée une chambre 3 reliée au réservoir 5. Un alésage 7 communique, d'une part, avec cette chambre 3 et, d'autre part, avec la sortie de l'accumulateur 9. Dans cet alésage 7 coulisse de façon non étanche un piston 17 qui vient en appui sur un poussoir 19 disposé dans la chambre 3. L'ensemble constitué par le piston 17 et le poussoir 19 est rappelé en position de repos par un ressort hélicoïdal 21 disposé dans la chambre 3 et s'appuyant sur une colerette prévue à cet effet sur le poussoir 19.

Ce dernier fait saillie de la chambre 3 et vient en appui sur un noyau magnétique 23, par exemple en ferrite, coulissant à l'encontre d'un ressort dans un alésage 25 au voisinage duquel se trouve un capteur de la position du noyau constitué, dans l'exemple représenté, par un interrupteur électrique à commande magnétique 27, connu dans le commerce sous le nom "relais reed". Cet interrupteur 27 est ouvert lorsque le noyau magnétique 23 est sensiblement en regard de l'interrupteur 27, et fermé dans l'autre cas. Cet interrupteur 27 est disposé en série dans le circuit d'alimentation électrique de la pompe 11, de manière à en commander la mise en route ou la mise hors service en fonction de la position du noyau magnétique 23. Dans l'exemple représenté, un second interrupteur électrique 29 est également disposé au voisinage de l'alésage 25 de façon décalée par rapport au premier, de manière à détecter et signaler une position basse (sur la Figure) du noyau 23.

Le régulateur fonctionne comme suit.

Hors fonctionnement du circuit hydraulique, les éléments mobiles du régulateur sont dans la position représentée : piston 17, poussoir 19 et noyau 23 sont en position basse (sur la Figure).

Lors de la mise en service du circuit hydraulique, le noyau 23 est en position basse et, par suite l'interrupteur 27 est fermé. La pompe 11 est donc alimentée en puissance électrique et vient remplir l'accumulateur 9 de fluide sous pression élevée prélevé sous basse pression dans le réservoir 5. La pression du fluide dans l'accumulateur 9 s'exerce sur l'extrémité basse du piston 17 qui va se mouvoir, en déplaçant le poussoir 19 à l'encontre de l'effet du ressort 21, ainsi que le noyau 23. Si la position d'équilibre correspond à une position du noyau 23 sensiblement en regard de l'interrupteur 27, celui-ci s'ouvre et la pompe 11 est mise hors-service.

La pression dans l'accumulateur 9 décroit alors soit du fait de l'utilisation du fluide dans le moteur hydraulique 15 soit du fait de la fuite de fluide ménagée entre le piston 17 et l'alésage 7. L'ensemble constitué par le piston 17, le poussoir 19 et le noyau 23 descend (sur la Figure) alors de façon correspondante, éloignant le noyau 23 de l'interrupteur 27. Celui-ci se ferme alors, mettant la pompe 11 en service jusqu'à ce que l'augmentation de pression dans l'accumulateur 9 soit suffisante pour que l'interrupteur 27 s'ouvre à nouveau.

Lorsque le circuit hydraulique est mis hors service, la fuite de fluide ménagée entre le piston 17 et l'alésage 7 permet à l'accumulateur 9 de se vider doucement dans le réservoir 5.

Dans un exemple de réalisation, l'interrupteur 29 était destiné à allumer un voyant électrique lorsque la pression du fluide dans l'accumulateur était inférieure à 80 bars et donc insuffisante pour faire fonctionner de manière sûre le moteur hydraulique ainsi alimenté. L'interrupteur 27 se fermait pour une pression décroissant au-dessous de 160 bars et s'ouvrait pour une pression dépassant 180 bars. On a ainsi obtenu un régulateur manométrique permettant au moteur hydraulique de recevoir un fluide sous une pression comprise entre 160 et 180 bars en permanence, et permettant de signaler une défaillance du circuit hydraulique. On comprendra que par un choix judicieux de la raideur du ressort 21 et de la position de l'interrupteur électrique 27, on peut modifier aisément la plage de fonctionnement d'un tel régulateur manométrique.

De préférence, une rainure en hélice est pratiquée sur la périphérie du piston 17 de manière à obtenir une fuite calibrée dont le débit déterminera le temps nécessaire à l'accumulateur 9 pour se vider complètement du fluide. Cette rainure apporte également l'avantage d'assurer un autocentrage du piston qui, de fait, n'est pas au contact de l'alésage porteur, mais se déplace sur un film de fluide, ce qui réduit l'hystéresis de l'ensemble.

L'homme du métier pourra apporter de nombreuses modifications à un tel régulateur sans sortir du cadre de l'invention. En effet, la rainure pratiquée sur le piston pourrait à la place être pratiquée dans l'alésage. Piston 17 et poussoir 19 peuvent être solidaires l'un de l'autre et même être réalisés monolithiquement. Des vis peuvent être ajoutées pour permettre un étalonnage en pression du régulateur manométrique en déplaçant plus ou moins les interrupteurs 27,29.

On peut également ajouter à l'entrée de l'alésage 7 reliée à l'accumulateur 9 un filtre pour éviter le colmatage de la fuite de fluide entre le piston 17 et l'alésage 7.

## Revendications

1. Régulateur manométrique à fuite pour circuit hydraulique comprenant au moins un réservoir de fluide sous basse pression (5), une pompe (11) et un accumulateur de fluide sous pression élevée (9), caractérisé en ce qu'il comprend :
- un poussoir (19) faisant saillie d'une chambre (3) reliée au dit réservoir (5) ;
- au moins un capteur (27) de la position d'un noyau magnétique (23) coulissant sous l'effet du dit poussoir (19) au voisinage du dit capteur (27), de manière à commander le fonctionnement de la dite pompe (11) ;
- un piston (17) coulissant de façon non étanche dans un alésage (7), communiquant d'une part avec la dite chambre (3) et d'autre part avec une sortie du dit accumulateur (9), de façon à déterminer une fuite du fluide hydraulique entre le dit accumulateur (9) et le dit réservoir (5), le dit piston (17) ayant une extrémité s'appuyant sur le dit poussoir (19) ; et
- un moyen élastique (21) s'opposant à l'effet de la pression du dit fluide dans le dit accumulateur (9) sur le dit piston (17), de manière que la position du dit noyau (23) soit fonction de la pression du dit fluide dans le dit accumulateur (9).

2. Régulateur manométrique selon la revendication 1, caractérisé en ce que le dit moyen élastique (21) est un ressort hélicoïdal disposé dans la dite chambre (3) et s'appuyant sur le dit poussoir (19).

3. Régulateur manométrique selon la revendication 1 ou 2, caractérise en ce que le dit capteur (27) est un interrupteur électrique à commande magnétique relié au circuit d'alimentation électrique de la dite pompe (11).

4. Régulateur manométrique selon l'une quelconque des revendications 1 à 3, caractérisé en ce que le dit piston (17) et le dit poussoir (19) sont solidaires l'un de l'autre.

5. Régulateur manométrique selon l'une quelconque des revendications 1 à 4, caractérisé en ce que au moins une rainure est pratiquée à la périphérie du dit piston (17).

6. Régulateur manométrique selon l'une quelconque des revendications 1 à 4, caractérisé en ce que au moins une rainure est pratiquée dans le dit alésage (7).

7. Régulateur manométrique selon la revendication 5 ou 6, caractérisé en ce que la dite rainure affecte sensiblement la forme d'une hélice.

## Patentansprüche

1. Druckregler mit Leckverlust für einen Hydraulikkreis mit wenigstens einem Vorratsbehälter (5) für Fluid unter niedrigem Druck, einer Pumpe (11) und einem Sammelbehälter (9) für Fluid unter erhöhtem Druck, gekennzeichnet durch:
- eine Schubstange (19), die aus einer mit dem Vorratsbehälter (5) verbundenen Kammer (3) hervorsteht;
- wenigstens einen Meßfühler (27) für die Position eines Magnetkerns (23), der in der Nähe des Meßfühlers (27) unter der Wirkung der Schubstange (19) in der Weise gleitet, daß er den Betrieb der Pumpe (11) steuert;
- einen Kolben (17), der nicht dicht in einer Bohrung (7) gleitet, die zum einen mit der Kammer (3) und zum anderen mit einem Ausgang des Sammelbehälters (9) in Verbindung steht, so daß ein Hydraulikfluid-Leckstrom zwischen dem Sammelbehälter (9) und dem Vorratsbehälter (5) bestimmt wird, wobei der Kolben (17) ein Ende aufweist, das sich auf der Schubstange (19) abstützt;
und
- ein Federelement (21), das der Wirkung des Fluiddrucks im Sammelbehälter (9) auf den Kolben (17) in der Weise entgegenwirkt, daß die Position des Kerns (23) eine Funktion des Fluiddrucks im Sammelbehälter (9) ist.

2. Druckregler nach Anspruch 1, dadurch gekennzeichnet, daß das Federelement (21) eine in der Kammer (3) angeordnete Schraubenfeder ist, die sich an der Schubstange (19) abstützt.

3. Druckregler nach Anspruch 1 oder 2, dadurch gekennzeichnet, daß der Meßfühler (27) ein magnetisch gesteuerter, elektrischer Schalter ist, der mit dem elektrischen Versorgungskreis der Pumpe (11) verbunden ist.

4. Druckregler nach einem der Ansprüche 1 bis 3, dadurch gekennzeichnet, daß der Kolben (17) und die Schubstange (19) fest miteinander verbunden sind.

5. Druckregler nach einem der Ansprüche 1 bis 4, dadurch gekennzeichnet, daß im Umfang des Kolbens (17) wenigstens eine Nut ausgebildet ist.

6. Druckregler nach einem der Ansprüche 1 bis 4, dadurch gekennzeichnet, daß in der Bohrung (7) wenigstens eine Nut ausgebildet ist.

7. Druckregler nach Anspruch 5 oder 6, dadurch gekennzeichnet, daß die Nut im wesentlichen schraubenförmig ist.

## Claims

1. Leakage-ty pressure governor for a hydraulic circuit, comprising at least one reservoir of fluid under low pressure (5), a pump (11) and an accumulator of fluid under high pressure (9), characterized in that it comprises:
- a pusher (19) projecting from a chamber (3) connected to said reservoir (5);
- at least one sensor (27) detecting the position of a magnetic core (23) sliding under the effect of said pusher (19) in the vicinity of said sensor (27), so as to control the functioning of said pump (11);
- a piston (17) sliding non-sealingly in a bore (7) communicating with said chamber (3) on the one hand and with an outlet of said accumulator (9) on the other hand, so as to establish a leakage of the hydraulic fluid between said accumulator (9) and said reservoir (5), said piston (17) having one end bearing on said pusher (19); and
- an elastic means (21) opposing the effect of the pressure of said fluid in said accumulator (9) on said piston (17), in such a way that the position of said core (23) is a function of the pressure of said fluid in said accumulator (9).

2. Pressure governor according to Claim 1, characterized in that said elastic means (21) is a helical spring arranged in said chamber (3) and bearing on said pusher (19).

3. Pressure governor according to Claim 1 or 2, characterized in that said sensor (27) is a magnetically controlled electrical breaker connected to the electrical supply circuit of said pump (11).

4. Pressure governor according to any of Claims 1 to 3, characterized in that said piston (17) and said pusher (19) are fixed to one another.

5. Pressure governor according to any of Claims 1 to 4, characterized in that at least one groove is made on the periphery of said piston (17).

6. Pressure governor according to any one of Claims 1 to 4, characterized in that at least one groove is made in said bore (7).

7. Pressure governor according to Claim 5 or 6, characterized in that said groove assumes substantially the form of a helix.
